# EUROPEAN PATENT SPECIFICATION

(11) **EP 2 530 294 B1**
(45) Date of publication and mention of the grant of the patent: **09.04.2014**
(21) Application number: 11168267.0
(22) Date of filing: 31.05.2011
(51) Int. Cl.: F02M 55/00, F02M 55/02, F02D 19/06, F02M 37/00, B60K 15/01, F16L 9/19, F02M 43/00, F02M 69/46, F02M 21/02, F16L 39/00, F16L 41/02, F02M 63/00

(54) **Double-walled fuel supply line element**
Doppelwandiges Kraftstoffversorgungsleitungselement
Élément de ligne d'alimentation de carburant à double paroi

(43) Date of publication of application: 05.12.2012
(73) Proprietor: Caterpillar Motoren GmbH & Co. KG, 24159 Kiel (DE)
(72) Inventor: Bleyer, Benjamin, 24159 Kiel (DE); Rebelein, Werner, 24159 Kiel (DE); Uslu, Fuat, 24146 Kiel (DE); Janzen, Jan, 24145 Kiel (DE); Bakindi, Bilal, 24159 Kiel (DE)
(74) Representative: Kramer - Barske - Schmidtchen

(56) References cited:
- EP-A1- 0 625 637
- EP-A1- 1 469 188
- EP-A2- 1 150 006
- US-A1- 2002 046 735
- US-A1- 2006 236 979

## Description

### Technical Field

The present disclosure generally refers to a double-walled fuel supply line element configured to be used in a fuel supply system of an internal combustion engine. Particularly, the present disclosure refers to a double-walled fuel supply line element configured to be used in a fuel supply system which is configured and designed to supply gaseous fuels and/or fluid fuels.

Furthermore, the present disclosure refers to a method for manufacturing a double-walled fuel supply line element of the type mentioned above.

### Background

Fuel supply systems which are particularly used in gas or dual-fuel engines may have to be specifically designed due to security purposes. For example, double-wall or multi-wall configurations have to be applied to all gas leading components as for example lines/pipes or connection elements to be used in gas or dual-fuel engines. Such double-walled fuel pipe elements or fuel supply line elements may be used on ships or vessels where gas or dual-fuel engines may be operated. The same applies to gas or dual-fuel engines used to generate electrical power.

Double-walled configurations of fuel supply line elements may be used to prevent leakage of gas into the atmosphere in case of damage of an inner pipe of such fuel supply pipes and fuel supply line elements, respectively. Double-walled fuel supply pipes may be configured such that fuel may be piped from a first place to a second place located in a distance to the first place within an inner pipe surrounded by an outer pipe.

Additionally, a fuel supply line element may be configured such that fuel may be guided from a first place to a second place and to at least a third place C differing from the first and second places A and B. All necessary inner pipe parts of such a line element may be surrounded by outer pipe parts commonly forming an outer shell.

For a fuel distribution from a common supply line to individual fuel inlets, e.g. particularly including gas inlet valves arranged at cylinder heads, a T-shaped connection element may be necessary. Up to now, T-shaped connection elements have been provided as welded assemblies comprising a plurality of components. Accordingly, a high degree of production precision may be necessary. The variety of welded seams may cause a high fault potential. The effort for monitoring and checking during manufacturing and operation of such supply lines may be high.

JP 63018124 A shows an exhaust pipe structure comprising an inner pipe including bead portions projecting outwardly from the inner pipe formed of a heat resistance metal and an outer pipe formed of a cast iron contacted at the inner side by the bead portions for improving the inner pressure proof strength of the inner pipe is shown in.

WO 99/37945 A1 refers to a multiple pipe comprising at least two inner pipes lying against each other with a wall piece. The inner pipes are enclosed of at least a part of the length of an outer pipe. Due to such a multiple part construction a much greater mechanical strength shall be obtained and simultaneously bendability shall be increased. The multiple pipe of WO 99/37945 A1 as well as the exhaust pipe structure of JP 63018124 A1 are not usable as parts of a double-walled fuel supply system.

US 2002/0046735 A1 refers to a double-walled fuel rail comprising a plastic fuel conduit and a gas conduit at least partially surrounding the plastic fuel conduit. The gas conduit is made of plastic, too. The reason for providing the outer gas conduit is that inner plastic fuel rails are porous and consequently permit fumes or vapor from the liquid fuel to permeate into the environment.

US 2006/0236979 A1 also refers to a line system for fluids having volatile components. As shown in one of the drawings, an inner fluid line is surrounded by a line wall Support webs are provided to separate two scavenging chambers formed between the outer wall line and the inner fluid line. At least the inner fuel line is made of plastic. The reason for providing the outer line wall is the same as in US 2002/0046735. Again, due to the plastic profile of the inner fluid line fluids guided therein and having volatile components may produce fuel vaporisation emissions to the environment. Due to the outer wall line such fuel vaporisation emissions may be reduced, without multi layered plastic pipes having to be used according to the prior art. The problem to be solved by the double-walled fuel line systems of US 2002/0046735 A1 and US 2006/0236979 A1 does not occur if the inner fluid line is not made from plastic.

The present disclosure is directed, at least in part, to improving or overcoming one or more aspects of the prior systems.

### Summary of the disclosure

In one aspect the present disclosure refers to a double-walled fuel supply line element configured to be used in a fuel supply system. The double-walled fuel supply line element is provided with a first end face and a second end face. The double-walled fuel supply line element comprises an inner line element, an outer line element, and a connecting structure configured to fixedly arrange the outer line element around the inner line element such that a hollow space being open at the two end faces of the double-walled fuel supply line element is provided between the inner line element and the outer line element. The inner line element, the outer line element, and the connecting structure are integrally casted from at least one of the materials of the group comprising non-alloyed cast steel, alloyed cast steel, cast iron, grey cast iron, ductile cast iron as e.g. EN-GJS-400-15, and a cast iron including any additive. The term "integrally casted" means casted in one piece.

In another aspect the present disclosure refers to a method for manufacturing a double-walled fuel supply line element. The method comprises the step of providing an inner core defining an inner surface of an inner line element. Further, the method comprises the step of providing an intermediate core defining an outer surface of the inner line element and an inner surface of an outer line element. The method further comprises the steps of providing a mold defining the outer surface of the outer line element, arranging the inner core and the intermediate core in the mold, and filling all gaps defined by the inner core, the intermediate core and the mold with at least one of the materials of the group comprising non-alloyed cast steel, alloyed cast steel, cast iron, grey cast iron, ductile cast iron as e.g. EN-GJS-400-15, and a cast iron including any additive. Finally, the method comprises the steps of cooling down the cast material and removing the inner core, the intermediate core, and the mold. The intermediate core or the mold or the intermediate core and the mold are configured such that a connecting structure is provided between the inner line element and the outer line element, the connecting structure being configured to fixedly arrange the outer line element around the inner line element such that a hollow space opens out at least one of a first end face and a second end face of the fuel supply line element.

Other features and aspects of this disclosure will be apparent from the following description and the accompanying drawings.

Other features and aspects of this disclosure will be apparent from the following description and the accompanying drawings.

### Brief description of the drawings

Fig. 1 shows a vertical cross-sectional perspective view of a T-shaped double-walled fuel supply line element according to an exemplary embodiment of the present disclosure;

Fig. 2 shows a perspective view of the exemplary embodiment of a double-walled fuel supply line element of Fig. 1;

Fig. 3 shows another vertical cross-sectional perspective view of the fuel supply line element of Fig. 1 and 2;

Fig. 4 shows a cross-sectional view of a part of a common rail and a part of a cylinder head of an internal combustion engine with n integrated fuel supply line element according to the present disclosure;

Fig. 5 shows a part of a fuel supply line system including two double-walled fuel supply line elements according to the present disclosure;

Fig. 6 shows a cross-sectional view of the fuel supply line system of Fig. 5.

Fig. 7 shows an intermediate core for manufacturing a double-walled fuel supply line element according to the present disclosure;

Fig. 8 shows an inner core for manufacturing a double-walled fuel supply line element according to the present disclosure; and

Fig. 9 shows an illustrating view of a mold for manufacturing a double-walled fuel supply line element, an inner core as shown in Fig. 8 and an intermediate core as shown in Fig 7 being inserted in the mold.

### Brief description of the drawings

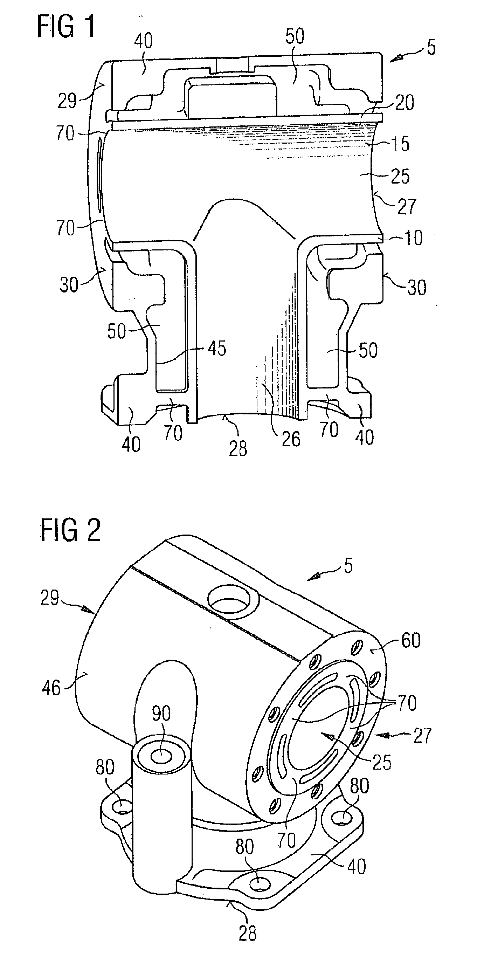

Referring to Figs. 1 to 3, a first exemplary embodiment of a double-walled fuel supply line element 5 according to the present disclosure. The double-walled fuel supply line element 5 may comprise an inner line element 10 and an outer line element 40. A connecting structure 70 may connect the inner line element 10 and the outer line element 40 such that the inner line element 10 is fixedly arranged within the outer line element 40 and an intermediate hollow space 50 is defined between the inner line element 10 and the outer line element 40.

The double-walled fuel supply line element 5 may be formed as a simple straight fuel supply line element (not shown), or, e.g. as a T-shaped double-walled fuel supply line element 5 as shown in Figs. 1 to 3 etc. Further, a double-walled fuel supply line element according to the present disclosure also may have an arc form, an X-shape, an L-shape, etc.

The T-shaped fuel supply line element of Figs. 1 to 3 may be provided with a first inner line hollow space 25 and a second inner line hollow space 26 connected to the first inner line hollow space 25 and forming a T-shaped hollow space 25, 26. The first inner line hollow space 25 and the second inner line hollow space 26 are defined by an inner surface 15 of the T-shaped inner line element 10. Accordingly, the first inner line hollow space 25 may be open to two opposite sides, namely end faces 27 and 29. The second inner line hollow space 26 may open to another end face 28.

The outer line element 40 may surround the inner line element 10 enclosing the intermediate hollow space 50. An inner surface 45 of the outer line element 40 and the outer surface 20 of the inner line element 10 may define the intermediate hollow space 50.

The connection structure 70 may comprise one or more elements or links extending from an outer side of the inner element 10 to an inner part of the outer line element 40. The shape of these links can be seen particularly in Figs. 1 to 3. In these exemplary embodiments of Figs. 1 to 3 the links 70 are arranged, e.g., at the neighborhood of end faces 27, 28 and 29. End face 27 and end face 29 are opposite to each other and end face 28 extends in a direction enclosing an angle of e.g. about 90° to a middle axis extending between the two end faces 27 and 29.

As illustrated in Fig. 2 the end face 27 may comprise a connection surface 30 configured to be connected to a similar connection surface of another associated double-walled fuel supply line element 5. The other end face 29 of the double-walled fuel supply line element 5 may be configured identical or different to the end face 27. The same may apply to the third end face 28.

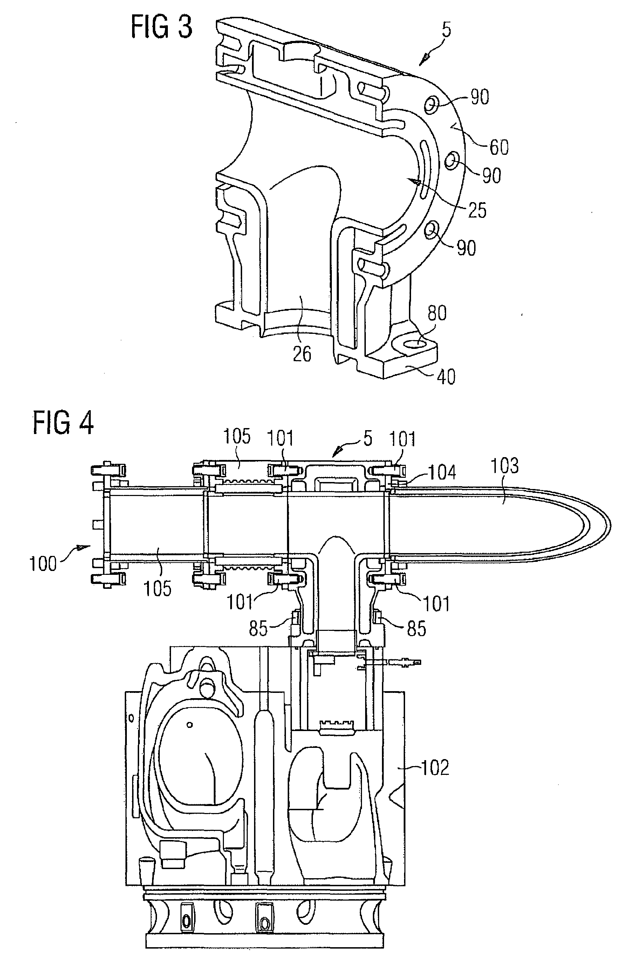

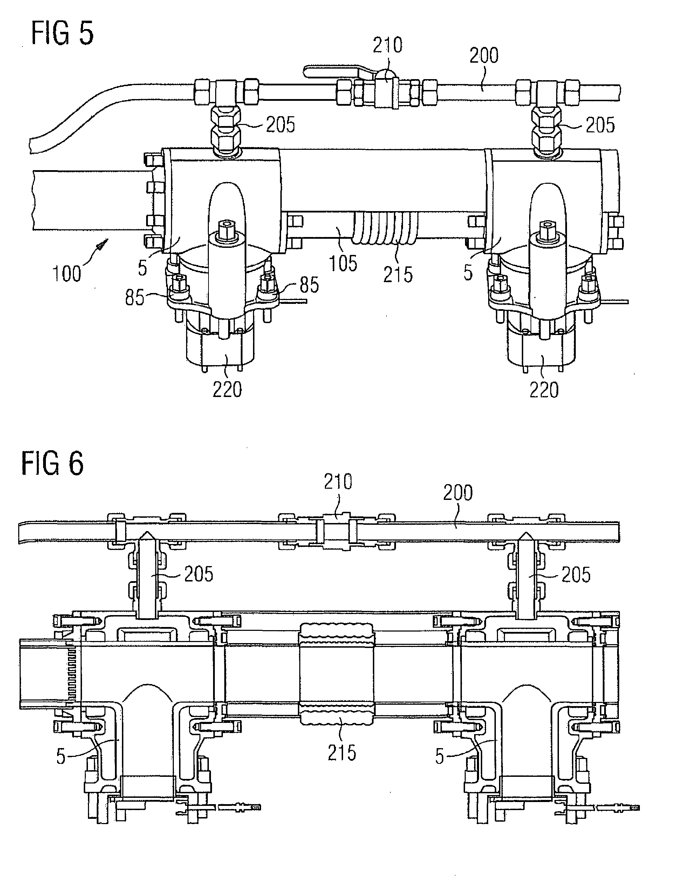

However, in the present exemplary embodiments shown in Figs. 1 to 3, the end face 28 might be configured different, particularly including a connection flange. The connection flange may comprise one or more mounting holes 80 in which mounting screws 85 may extend (see e.g. Fig. 5). Additional connection holes 90 may extend parallel to the hollow space 26. These connection holes 90 may be configured to receive further mounting screws 95. For example, the connection flange may be configured to be connected to a part of a cylinder head 102 of an internal combustion engine, see e.g. Figs. 4 and 6.

In another exemplary embodiment of the fuel supply line element 5 illustrated in e.g. Fig. 2, the connection holes 90 may not be provided in elongated gates as shown, but be provided in the connection flange.

All parts shown in Figs. 1 to 3 of the exemplary embodiments of a double-walled fuel supply line element 5 may be integrally casted, for example from a material selected from the group consisting of cast iron, ductile iron as e.g. EN-GJS-400-15. The ductile cast iron designated EN-GJS-400-15 may have specific characteristics as described in the European Norm (EN). Particularly this material, also known as ductile cast iron, nodular cast iron, spheroidal graphite iron, and spherulitic graphite cast iron, may provide an adequate gas proofness, strength and stability for the application of a fuel supply line element as described herein.

Fig. 4 illustrates an exemplary usage of a double-walled fuel supply line element 5 as shown in Figs. 1 to 3. Here, the double-walled fuel supply line element 5 has a T-shape and forms part of a common rail of a double-walled fuel line supply system 100. On both end faces 27 and 29 of the fuel supply line element 5 double-walled fuel supply line elements, e.g. a common rail end part 103 and an common rail intermediate part 105, are mounted via connection screws 101. These connection screws 101 may extend into the connection holes 90 shown in Figs. 2 and 3. Sealing elements 104 may be arranged intermediate to the end faces 27, 29 of the fuel supply line element 5 and the other double-walled fuel supply line elements 105, 103. The third end face 28 of the T-shaped double-walled fuel supply line element 5 may be connected to the cylinder head 102.

Fig. 5 shows a very similar fuel supply line system as Fig. 4 including two double-walled fuel supply elements 5. Here, a drain/monitoring line 200 extends parallel to the fuel supply line system 100. Connection parts 205 connect the intermediate hollow space 50 of each double-walled fuel supply line element 5 to the drain-monitoring line 200. This can be particularly seen in the cross-sectional view of Fig. 6. The drain/monitoring line 200 may comprise a shut-off valve 210. The shut-off valve 210 may connect or separate two adjacent parts of the drain/monitoring line 200. Here, each fuel supply line element 5 provides a connection between the fuel supply line system 100 and gas inlet valves 220. The gas inlet valves 220 may be configured to control the amount of gaseous fuel to be guided respectively to a cylinder of an internal combustion engine being operated in a gas operating mode. A compensation element 215 may be provided between the two fuel supply line elements 5 for compensating length changes caused by temperature changes. The fuel supply line elements 5, the compensation element 215 and all other parts of the fuel supply line system 100 may have a double-walled configuration.

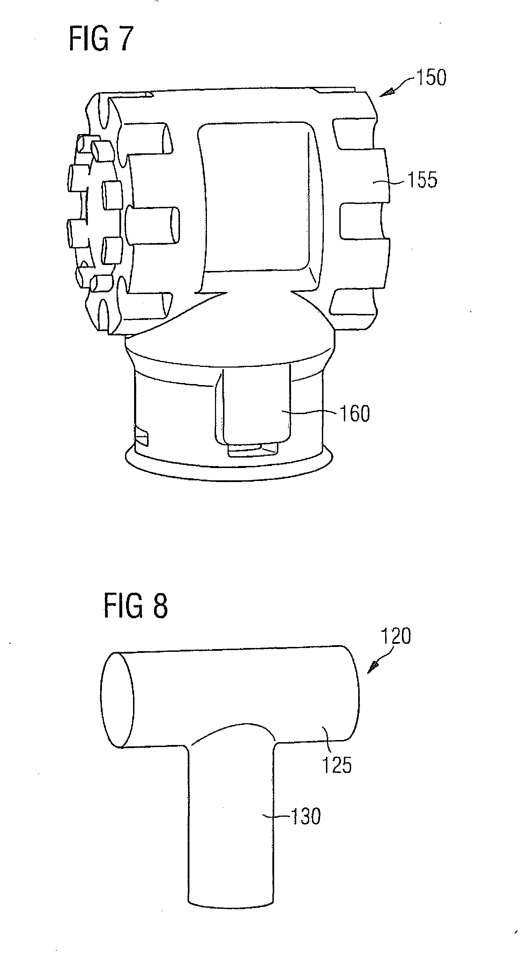

For manufacturing such an integrally casted double-walled fuel supply line element 5 an intermediate core 150 as shown in Fig. 7, an inner core as shown in Fig. 8, and a mould 140 as schematically illustrated in claim 9 may be used. The intermediate core of Fig. 7 may comprise an intermediate core part 155 and a second intermediate core part 160. The intermediate core part 150 may be shaped such that it is identical with the intermediate hollow space 50 between the inner line element 10 and the outer line element 40. The inner core 120 may comprise a first inner core part 125 and a second inner core part 130. These inner core parts 125, 130 may define the inner hollow space 15 of the fuel line element 5. The outer mould 140 may define the outer surface of the outer line element 40.

### Industrial applicability

Referring to Figs. 1-3 and particularly Figs. 4 to 6, various usages of a double-walled fuel supply line element 5 according to the present disclosure are described in the following.

The double-walled fuel supply line element 5 of Figs. 1-3 may be part of a common rail fuel supply line system 100. Accordingly, the fuel supply line element 5 may be mounted to a cylinder head 102 of an internal combustion engine as shown in Fig. 4 and described above in more details. In the fuel supply line system 100 a gaseous fuel may be stored and distributed via the fuel supply line element 5 to gas inlet valves 220 shown in Fig. 5. If there is any leakage in the inner line element 10, the gaseous fuel may enter the intermediate hollow space 50 defined in the double-walled fuel supply line element 5. The double-walled fuel supply line element 5 is connected to opposite fuel supply line elements 103, 105 (see Fig. 4) and these further fuel supply line elements 103, 105 are double-walled too and connected on the end faces 27, 28 of the double-walled fuel supply line element 5 such that the intermediate hollow space 50 is fluidly connected to the hollow space of the double-walled fuel supply line elements 103, 105. Accordingly, the gas leaking out of the inner line hollow space 25 of the double-walled fuel supply line element 5 cannot enter into the atmosphere, but is received in the intermediate hollow space 50. Accordingly, security is guaranteed.

In some cases, as for example shown in Fig. 5, the double-walled fuel supply line elements 5 are connected via connection parts 205 to the drain/monitoring line 200 and the leaked fuel may be guided via the line 200 back to a reservoir (not shown). If necessary, the shut-off valve 210 may be used to connect or separate various parts of the line 200 for monitoring purposes or fault detection purposes.

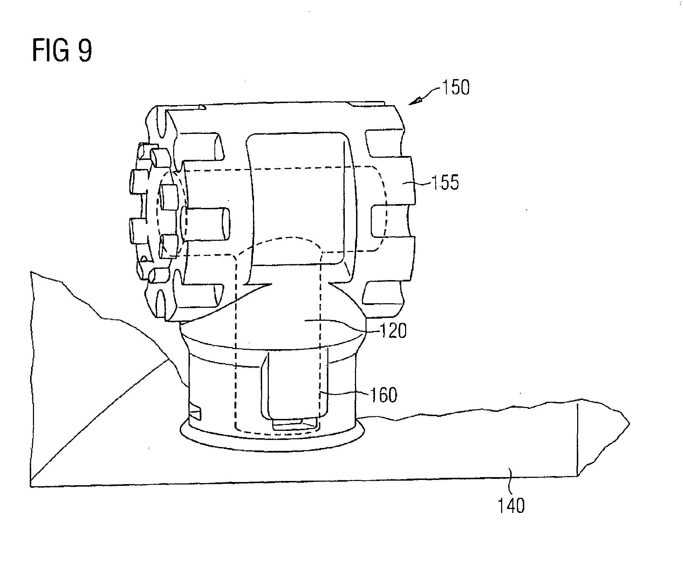

Referring to Figs. 7 to 9 an exemplary method for manufacturing a double-walled fuel supply line element 5 is described in the following. The inner core 100 is arranged within the intermediate core 150. For this purpose, the intermediate core 150 may comprise two separate parts so that the inner core 120 may be placed in the intermediate core and the second part of the intermediate core is then put on the corresponding other intermediate core part. The intermediate core 150 housing the inner core 120 may then be set in the mold 140 in such a distance that the desired thickness of the outer line element 40 is defined.

Subsequently, the mold 140 housing the intermediate core 150 and in the intermediate core 150 the inner core 120 is filled with a cast material, for example, a material as mentioned herein, e.g. cast iron etc.

Afterwards, the whole mold and/or the cast material is cooled down. Finally, the inner core 120, the intermediate core 150 and the mould 140 are removed. For example, the inner core 120 and the intermediate core 150 will be destroyed such that parts of the inner core 120 and/or the intermediate core 150 may be pulled out of the casted product.

Accordingly, a one-piece casted double-walled fuel supply line element 5 is manufactured and may be subsequently machined, if necessary.

A double-walled fuel supply line element, particularly an element 5 as described above and illustrated in the Figs. may be used in a fuel supply system configured to be used e.g. for supplying middle and large sized internal combustion engines as used for example in ships, vessels or electric power plants.

Although such a double-walled line element might be particularly configured to be used in fuel supply systems, it might also be possible to use such a double-walled line element in any other systems where liquid or gaseous mediums shall be guided from one place to another place within an inner line element protected by an outer line element. The intermediate hollow space defined by the outer line element surrounding the inner line element may be configured and used to receive leaking fuel and/or drain and/or monitor possible a leakage of fuel, e.g. gas, out of the inner line element.

Another usage may comprise cooling or heating a medium flowing in the inner line element by means of a media flowing in the intermediate hollow space defined by the outer line element.

A double-walled line element according to the present disclosure may be designed as a straight line element, a T-shaped line element, a corner like line element, a cross like line element, or as a band like element. In addition, a double-walled line element according to the present disclosure may also be provided with at least one additional outer line element such that a multi-walled supply line element may be provided.

The term "line" used herein may be replaced by the term "pipe". Accordingly, the two terms may both be used for naming a medium guiding/distributing element according to the present disclosure.

Although the preferred embodiments of this invention have been described herein, improvements and modifications may be incorporated without departing from the scope of the following claims.

## Claims

1. A double-walled fuel supply line element (5) configured to be used in a fuel supply system (100) an internal combustion engine, comprising:
an inner line element (10);
an outer line element (40); and
a connecting structure (70) configured to fixedly arrange the outer line element (40) around the inner line element (10) such that a tubular hollow space (50) is provided between the inner line element (10) and the outer line element (40); **characterized in that**
the inner line element (10), the outer line element (40), and the connecting structure (70) are integrally casted from at least one of the materials of the group comprising non-alloyed cast steel, alloyed cast steel, cast iron, grey cast iron, ductile cast iron as e.g. EN-GJS-400-15, and a cast iron including any additive.

2. The double-walled fuel supply line element (5) of claim 1, further comprising:
a first end face (27) configured to be connected to an adjacent double-walled fuel supply line element (105);
at least one second end face (28, 29) arranged in a distance to the first connection face (30) and configured to be connected to another adjacent double-walled fuel supply line element.

3. The double-walled fuel supply line element of claim 1 or 2, the inner line element (10) and the outer line element (40) each being provided with at least two line openings.

4. The double-walled fuel supply line element of claim 2 or 3, the shape of the double walled fuel supply line element being selected from the group consisting of: a straight shape, a T-shape, a L-shape, a corner like shape, a X-shape shape.

5. The double-walled fuel supply line element of any one of the preceding claims, the connecting structure (70) being shaped such that at least one opening connected to the intermediate hollow space (25, 26) is provided at at least one end face (27, 28, 29) of the fuel supply line element (5).

6. The double-walled fuel supply line element of any one of the preceding claims, the connecting structure (70) including a plurality of fixed links extending between the inner line element (10) and the outer line element (40), the flow cross-section defined by the inner line element (10) and the outer line element (40) being reduced due to the fixed links (70) less than 50%, particularly less than 25%, more particularly, less than 10%.

7. A method for manufacturing a double-walled fuel supply line element (5), the method comprising:
providing an inner core (120) defining an inner surface (15) of an inner line element (10);
providing an intermediate core (150) defining an outer surface (20) of the inner line element (10) and an inner surface (45) of an outer line element (40) surrounding the inner line element (10);
providing a mold (140) defining the outer surface (46) of the outer line element (40), wherein the intermediate core (150) and/or the mold (140) are configured such that a connecting structure (70) is defined between the inner line element (10) and the outer line element (40), the connecting structure (70) being configured to fixedly arrange the outer line element (40) around the inner line element (10) such that a hollow space (50) opens out at at least one of a first end face (27) and a second end face (28, 29) of the double-walled fuel line element (5);
arranging the inner core (120) and the intermediate core (150) in the mold (140);
filling the mold (140) with a cast material selected from at least one of the materials of the group comprising cast iron, grey cast iron, ductile cast iron as e.g. EN-GJS-400-15, and a cast iron including any additive;
cooling down the cast material; and
removing the inner core (120), the intermediate core (150) and the mold (140).

## Patentansprüche

1. Doppelwandiges Kraftstoffversorgungsleitungselement (5), das zur Verwendung in einem Kraftstoffversorgungssystem (100) einer Verbrennungskraftmaschine ausgebildet ist, mit:
einem inneren Leitungselement (10);
einem äußeren Leitungselement (40); und
einer Verbindungsstruktur (70), die dazu ausgebildet ist, das innere Leitungselement (40) starr um das äußere Leitungselement (10) derart anzuordnen, dass ein röhrenförmiger Hohlraum (50) zwischen dem inneren Leitungselement (10) und dem äußeren Leitungselement (40) geschaffen ist,
**dadurch gekennzeichnet, dass**
das innere Leitungselement (10), das äußere Leitungselement (40) und die Verbindungsstruktur (70) integral aus mindestens einem der Materialien der unlegierten Stahlguss, legierten Stahlguss, Gusseisen, Grauguss, Kugelgraphitgusseisen wie beispielsweise EN-GJS-400-15 und ein Gusseisen mit einem Additiv umfassenden Gruppe gegossen sind.

2. Doppelwandiges Kraftstoffversorgungsleitungselement (5) nach Anspruch 1, ferner mit:
einer ersten Stirnfläche (27), die zur Verbindung mit einem benachbarten doppelwandigen Kraftstoffversorgungsleitungselement (105) ausgebildet ist;
mindestens einer in einem Abstand zu der ersten Verbindungsfläche (30) angeordneten zweiten Stirnfläche (28, 29), die zur Verbindung mit einem weiteren benachbarten doppelwandigen Kraftstoffversorgungsleitungselement ausgebildet ist.

3. Doppelwandiges Kraftstoffversorgungsleitungselement nach Anspruch 1 oder 2, wobei das innere Leitungselement (10) und das äußere Leitungselement (40) jeweils mit mindestens zwei Leitungsöffnungen versehen sind.

4. Doppelwandiges Kraftstoffversorgungsleitungselement nach Anspruch 2 oder 3, wobei die Form des doppelwandigen Kraftstoffversorgungsleitungselements aus der eine gerade Form, eine T-Form, eine L-Form, eine eckenartige Form, eine X-Form umfassenden Gruppe ausgewählt ist.

5. Doppelwandiges Kraftstoffversorgungsleitungselement nach einem der voranstehenden Ansprüche, wobei die Verbindungsstruktur (70) derart geformt ist, dass mindestens eine mit dem Zwischenhohlraum (25, 26) verbundene Öffnung an mindestens einer Stirnfläche (27, 28, 29) des Kraftstoffversorgungsleitungselements (5) vorhanden ist.

6. Doppelwandiges Kraftstoffversorgungsleitungselement nach einem der voranstehenden Ansprüche, wobei die Verbindungsstruktur (70) mehrere sich zwischen dem inneren Leitungselement (10) und dem äußeren Leitungselement (40) erstreckende starre Verbindungsstücke umfasst und der durch das innere Leitungselement (10) und das äußere Leitungselement (40) definierte Strömungsquerschnitt auf Grund der starren Verbindungsstücke (70) um weniger als 50%, insbesondere um weniger als 25%, insbesondere um weniger als 10% reduziert ist.

7. Verfahren zur Herstellung eines doppelwandigen Kraftstoffversorgungsleitungselements (5) mit folgenden Schritten:
Bereitstellen eines Innenkerns (120), der eine Innenfläche (15) eines inneren Leitungselements (10) definiert;
Bereitstellen eines Zwischenkerns (150), der eine Außenfläche (20) des inneren Leitungselements (10) und eine Innenfläche (45) eines äußeren Leitungselements (40), das das innere Leitungselement (10) umgibt, definiert;
Bereitstellen einer Gussform (140), die die Außenfläche (46) des äußeren Leitungselements (40) definiert, wobei der Zwischenkern (150) und/oder die Gussform (140) derart ausgebildet sind, dass eine Verbindungsstruktur (70) zwischen dem inneren Leitungselement (10) und dem äußeren Leitungselement (40) definiert ist, und wobei die Verbindungsstruktur (70) dazu ausgebildet ist, das äußere Leitungselement (40) starr um das innere Leitungselement (10) derart anzuordnen, dass ein Hohlraum (50) in mindestens einer ersten Stirnfläche (27) oder einer zweiten Stirnfläche (28, 29) des doppelwandigen Kraftstoffleitungselements (5) mündet;
Anordnen des Innenkerns (120) und des Zwischenkerns (150) in der Gussform (140);
Füllen der Gussform (140) mit einem Gussmaterial, das aus mindestens einem der Materialien der Gusseisen, Grauguss, Kugelgraphitgusseisen wie beispielsweise EN-GJS-400-15 und ein Gusseisen mit einem Additiv umfassenden Gruppe ausgewählt ist;
Abkühlen des Gussmaterials; und
Entfernen des Innenkerns (120), des Zwischenkerns (150) und der Gussform (140).

## Revendications

1. Elément (5) de conduite d'alimentation de carburant à double paroi configuré pour être utilisé dans un système (100) d'alimentation en carburant, un moteur à combustion interne, comprenant :
un élément (10) linéaire interne ;
un élément (40) linéaire externe ; et
un élément d'association (70) configuré pour disposer de manière fixe l'élément (40) linéaire externe autour élément (10) linéaire interne de telle façon que l'espace (50) creux tubulaire soit aménagé entre l'élément (10) linéaire interne et l'élément (40) linéaire externe ; **caractérisé en ce que**
l'élément linéaire interne (10), l'élément (40) linéaire externe, et l'élément d'association (70) sont intégralement coulés à partir d'au moins l'un des matériaux du groupe comprenant de l'acier coulé non-allié, de l'acier coulé allié, de la fonte, de la fonte grise, de la fonte ductile par exemple EN-GJS-400-15, et de la fonte comprenant un quelconque additif.

2. Elément (5) de conduite d'alimentation de carburant à double paroi selon la revendication 1, comprenant de plus :
une première face d'extrémité (27) configurée pour être connectée à un élément (105) de conduite d'alimentation de carburant à double paroi adjacent ;
au moins une deuxième face d'extrémité (28, 29) agencée à une distance d'une première face de connexion (30) et configurée pour être connectée à un autre élément de conduite adjacent d'alimentation de carburant à double paroi.

3. Elément de conduite d'alimentation de carburant à double paroi selon la revendication 1 ou 2, l'élément (10) linéaire interne et l'élément (40) linéaire externe étant chacun aménagé avec au moins deux ouvertures linéaires.

4. Elément de conduite d'alimentation de carburant à double paroi selon la revendication 2 ou 3, la forme de l'élément de conduite d'alimentation de carburant à double paroi étant sélectionnée dans le groupe comprenant une forme droite, une forme en T, une forme en L, une forme en coin, une forme en X.

5. Elément de conduite d'alimentation de carburant à double paroi selon l'une quelconque des revendications précédentes, l'élément d'association (70) étant formé de telle façon qu'au moins une ouverture, connectée à un espace (25, 26) creux intermédiaire, soit fournie à au moins une face d'extrémité (27, 28, 29) de l'élément (5) de conduite d'alimentation de carburant.

6. Elément de conduite d'alimentation de carburant à double paroi selon l'une quelconque des revendications précédentes, l'élément d'association (70) comprenant une pluralité de liens fixes s'étendant entre l'élément (10) linéaire interne et l'élément (40) linéaire externe, la section transversale d'écoulement définie par l'élément (10) linéaire interne et l'élément (40) linéaire externe étant réduite à cause des liens fixes (70) à une valeur inférieure à 50 %, en particulier à moins de 25 %, plus particulièrement à moins de 10 %.

7. Méthode de fabrication d'un élément (5) de conduite d'alimentation de carburant à double paroi, la méthode comprenant :
une mise à disposition d'un noyau interne (120) définissant une surface interne (15) d'un élément (10) linéaire interne ;
un mise à disposition d'un noyau (150) intermédiaire définissant une surface externe (20) de l'élément (10) linéaire interne et une surface interne (45) d'une élément (40) linéaire externe entourant l'élément (10) linéaire interne ;
une mise à disposition d'un moule (140) définissant la surface externe (46) de l'élément (40) linéaire externe, dans laquelle le noyau (150) intermédiaire et/ou le moule (140) sont configurés de telle façon que l'élément d'association (70) soit défini entre l'élément linéaire interne (10) et l'élément linéaire externe (40), l'élément d'association (70) étant configuré pour disposer de manière fixe l'élément (40) linéaire externe autour de l'élément (10) linéaire interne de telle façon qu'un espace creux (50) débouche vers au moins une première face frontale (27) et une deuxième face d'extrémité (28, 29) de l'élément (5) de conduite d'alimentation de carburant à double paroi ;
un agencement du noyau interne (120) et du noyau intermédiaire (150) dans le moule (140) ;
une remplissage du moule (140) avec un matériel de coulée choisi dans le groupe comprenant de l'acier coulé non-allié, de l'acier coulé allié, de la fonte, de la fonte grise, de la fonte ductile par exemple EN-GJS-400-15, et de la fonte comprenant un quelconque additif ;
un refroidissement du matériel coulé ; et
un enlèvement du noyau interne (120), du noyau intermédiaire (150) et du moule (140).
